Europäisches Patentamt

European Patent Office

Office européen des brevets

(11) Veröffentlichungsnummer: **0 636 652 A1**

## EUROPÄISCHE PATENTANMELDUNG

(21) Anmeldenummer: **94111540.4**

(22) Anmeldetag: **23.07.94**

(51) Int. Cl.$^6$: **C08L 33/10**, C08L 51/00

(30) Priorität: **31.07.93 DE 4325823**

(43) Veröffentlichungstag der Anmeldung:
**01.02.95 Patentblatt 95/05**

(84) Benannte Vertragsstaaten:
**BE CH DE ES FR GB IT LI NL**

(71) Anmelder: **BASF Aktiengesellschaft**
**Carl-Bosch-Strasse 38**
**D-67063 Ludwigshafen (DE)**

(72) Erfinder: **Deckers, Andreas, Dr.**
**Schulstrasse 11**
**D-55234 Flomborn (DE)**
Erfinder: **Wagner, Daniel, Dr.**
**Im Röhrich 67**
**D-67098 Bad Dürkheim (DE)**
Erfinder: **Wanzek, Reiner**
**Dhauner Strasse 34**
**D-67067 Ludwigshafen (DE)**

(54) **Thermoplastische Formmassen aus einem Copolymerisat auf der Basis von Alkylestern der Methacrylsäure und einem fünfstufigen Emulsionspfropfcopolymerisat.**

(57) Thermoplastische Formmassen, enthaltend im wesentlichen

(A) 20 bis 40 Gew.-% eines Copolymerisats, erhältlich im wesentlichen aus

80 bis 100 Gew.-% mindestens eins $C_1$-$C_{18}$-Alkylestersder Methacrylsäure und

0 bis 20 Gew.-% mindestens eines $C_1$-$C_{18}$-Alkylesters der Acrylsäure

und

(B) 60 bis 80 Gew.-% eines Emulsionspfropfcopolymerisates, aufgebaut aus im wesentlichen

($b_1$) 2 bis 10 Gew.-% eines Kerns, erhältlich durch Polymerisation eines Monomerengemisches bestehend aus im wesentlichen

80 bis 99,99 Gew.-% Methylmethacrylat (I),

0,01 bis 5 Gew.-% Allylmethacrylat (II)

0 bis 19,99 Gew.-% eines monofunktionellen Comonomeren (III) und

0 bis 3 Gew.-% eines di- oder polyfunkionellen Comonomeren (IV),

($b_2$) 15 bis 50 Gew.-% einer ersten Schale, erhältlich durch Polymerisation eines Monomerengemisches in Gegenwart des Kerns ($b_1$), bestehend aus im wesentlichen

60 bis 89,99 Gew.-% eines $C_1$-$C_{20}$-Alkylesters der Acrylsäure (V),

10 bis 39,99 Gew.-% eines vinylaromatischen Monomeren (VI),

0,01 bis 5 Gew.-% Allylmethacrylat (II),

0 bis 10 Gew.-% Methylmethacrylat (I) und/oder eines monofunktionellen Comonomeren (III) und

0 bis 3 Gew.-% eines di- oder polyfunktionellen Comonomeren (IV),

($b_3$) 5 bis 20 Gew.-% einer zweiten Schale, erhältlich durch Polymerisation eines Monomerengemisches mit der unter ($b_1$) genannten Zusammensetzung in Gegenwart des nach Stufe (b2) erhaltenen Polymerisates,

($b_4$) 15 bis 50 Gew.-% einer dritten Schale, erhältlich durch Polymerisation eines Monomerengemisches mit der unter ($b_2$) genannten Zusammensetzung in Gegenwart des nach Stufe ($b_3$) erhaltenen Polymerisates,

($b_5$) 15 bis 30 Gew.-% einer vierten Schale, erhältlich durch Polymerisation eines Monomerengemisches, bestehend aus im wesentlichen

80 bis 99,95 Gew.-% Methylmethacrylat (I),

0 bis 19,95 Gew.-% eines monofunktionellen Comonomeren (III) und

0,05 bis 2 Gew.-% eines Reglers (VII),

EP 0 636 652 A1

mit den Maßgaben, daß

.  die Summe der Anteile der Schalen ($b_2$) und ($b_4$) im Bereich von 50 bis 75 Gew.-% liegt und

.  die Teilchengröße ($d_{50}$-Wert) des Emulsionspfropfcopolymerisates einen mittleren Durchmesser im Bereich von 100 bis 200 nm aufweist.

Die vorliegende Erfindung betrifft thermoplastische Formmassen, enthaltend im wesentlichen

(A) 20 bis 40 Gew.-% eines Copolymerisats, erhältlich im wesentlichen aus

80 bis 100 Gew.-% mindestens eines $C_1$-$C_{18}$-Alkylesters der Methacrylsäure und

0 bis 20 Gew.-% mindestens eines $C_1$-$C_{18}$-Alkylesters der Acrylsäure und

(B) 60 bis 80 Gew.-% eines Emulsionspfropfcopolymerisates, aufgebaut im wesentlichen aus

($b_1$) 2 bis 10 Gew.-% eines Kerns, erhältlich durch Polymerisation eines Monomerengemisches bestehend im wesentlichen aus

80 bis 99,99 Gew.-% Methylmethacrylat (I),

0,01 bis 5 Gew.-% Allylmethacrylat (II)

0 bis 19,99 Gew.-% eines monofunktionellen Comonomeren (III) und

0 bis 3 Gew.-% eines di- oder polyfunktionellen Comonomeren (IV),

($b_2$) 15 bis 50 Gew.-% einer ersten Schale, erhältlich durch Polymerisation eines Monomerengemisches in Gegenwart des Kerns ($b_1$), bestehend im wesentlichen aus

60 bis 89,99 Gew.-% eines -$C_1$-$C_{20}$-Alkylesters der Acrylsäure (V),

10 bis 39,99 Gew.-% eines vinylaromatischen Monomeren (VI),

0,01 bis 5 Gew.-% Allylmethacrylat (II),

0 bis 10 Gew.-% Methylmethacrylat (I) und/oder eines monofunktionellen Comonomeren (III) und

0 bis 3 Gew.-% eines di- oder polyfunktionellen Comonomeren (IV),

($b_3$) 5 bis 20 Gew.-% einer zweiten Schale, erhältlich durch Polymerisation eines Monomerengemisches mit der unter ($b_1$) genannten Zusammensetzung in Gegenwart des nach Stufe (b2) erhaltenen Polymerisates,

($b_4$) 15 bis 50 Gew.-% einer dritten Schale, erhältlich durch Polymerisation eines Monomerengemisches mit der unter ($b_2$) genannten Zusammensetzung in Gegenwart des nach Stufe ($b_3$) erhaltenen Polymerisates,

($b_5$) 15 bis 30 Gew.-% einer vierten Schale, erhältlich durch Polymerisation eines Monomerengemisches, bestehend im wesentlichen aus

80 bis 99,95 Gew.-% Methylmethacrylat (I),

0,05 bis 19,95 Gew.-% eines monofunktionellen Comonomeren (III) und

0 bis 2 Gew.-% eines Reglers (VII),

mit den Maßgaben, daß

. die Summe der Anteile der Schalen ($b_2$) und ($b_4$) im Bereich von 50 bis 75 Gew.-% liegt und

. die Teilchengröße ($d_{50}$-Wort) des Emulsionspfropfcopolymerisates einen mittleren Durchmesser im Bereich von 100 bis 200 nm aufweist.

Des weiteren betrifft die Erfindung ein Verfahren zur Herstellung der erfindungsgemäßen thermoplastischen Formmassen, deren Verwendung sowie daraus hergestellte Formkörper und Folien.

Die EP-A 512 333 beschreibt thermoplastische Massen, die 5 bis 65 Gew.-% des erfindungsgemäß eingesetzten Emulsionspfropfcopolymerisates (B) zur Verbesserung der Schlagzähigkeit enthalten. Die in der genannten EP-Offenlegungsschrift genannten thermoplastischen Massen lassen sich jedoch nicht zu weißbrucharmen Folien verarbeiten.

Der vorliegenden Erfindung lag daher die Bereitstellung weiterer thermoplastischer Formmassen als Aufgabe zugrunde, die sich zu weißbrucharmen Folien verarbeiten lassen.

Demgemäß wurden die eingangs definierten thermoplastischen Formmassen gefunden.

Des weiteren wurde ein Verfahren zu deren Herstellung, ihre Verwendung zur Herstellung von Formkörpern und Folien sowie Formkörper und Folien aus diesen thermoplastischen Massen gefunden.

Die erfindungsgemäßen thermoplastischen Formmassen enthalten im wesentlichen 20 bis 40 Gew.-%, vorzugsweise 20 bis 34,99 Gew.-%, eines Copolymerisates, erhältich aus im wesentlichen

80 bis 100 Gew.-%, vorzugsweise 90 bis 99 Gew.-%, mindestens eines $C_1$-$C_{18}$-Alkylesters der Methacrylsäure und

0 bis 20 Gew.-%, vorzugsweise 1 bis 10 Gew.-%, mindestens eines $C_1$-$C_{18}$-Alkylesters der Acrylsäure und

60 bis 80 Gew.-%, vorzugsweise 65,01 bis 80 Gew.-%, eines fünfstufig aus

einem harten, nicht elastomeren Kern ($b_1$), einer elastomeren, ersten Schale ($b_2$), einer harten, nicht elastomeren, zweiten Schale ($b_3$), einer elastomeren, dritten Schale ($b_4$) und schließlich aus einer äußeren, harten, nicht elastomeren, vierten Schale ($b_5$) aufgebauten Emulsionspfropfcopolymerisates` wobei die einzelnen Stufen in folgenden Mengen vorhanden sind (die jeweiligen prozentualen Angaben beziehen sich auf das Gesamtgewicht des fünfstufigen Pfropfcopolyerisates.):

2 bis 10 Gew.-%, bevorzugt 2 bis 6 Gew.-% des Kernes ($b_1$),

15 bis 50 Gew.-%, bevorzugt 20 bis 45 Gew.-% der ersten Schale ($b_2$),

5 bis 20 Gew.-%, bevorzugt 5 bis 15 Gew.-% der zweiten Schale (b_3),

15 bis 50 Gew.-%, bevorzugt 20 bis 45 Gew.-% der dritten Schale (b_4) und

15 bis 30 Gew.-%, bevorzugt 15 bis 25 Gew.-% der vierten Schale (b_5)

mit den Maßgaben, daß die Summe der Anteile der Schalen (b_2) und (b_4) 50 bis 75 Gew.-%, bevorzugt 60 bis 75 Gew.-%, beträgt, und daß die Teilchengröße (d_{50}-Wert) des Emulsionspfropfcopolymerisates einen mittleren Durchmesser im Bereich von 100 bis 200, vorzugsweise von 100 bis 150 nm aufweist.

Als $C_1$-$C_{18}$-Alkylester der Methacrylsäure kommen bevorzugt die $C_1$-$C_4$-Alkylester wie Methylmethacrylat ("MMA"), Ethylmethacrylat, n-, i-Propylmethacrylat, n-Butylmethacrylat, Isobutylmethacrylat und tert.-Butylmethacrylat in Betracht, wobei Methylmethacrylat besonders bevorzugt ist, sowie Mischungen dieser Monomere.

Als $C_1$-$C_{18}$-Alkylester der Acrylsäure verwendet man bevorzugt die $C_1$-$C_4$-Alkylester wie Methylacrylat ("MA"), Ethylacrylat, n-, i-Propylacrylat, n-Butylacrylat, Isobutylacrylat, tert.-Butylacrylat, Pentyl-, Hexyl-, Heptyl-, Octyl-, 2-Ethylhexyl-, Nonyl-, Decyl-, Lauryl- oder Stearylacrylat, wobei Methylacrylat, n-Butylacrylat und 2-Ethylhexylacrylat besonders bevorzugt sind, sowie Mischungen dieser Monomeren.

Als besonders vorteilhaft haben sich nach den bisherigen Beobachtungen Polymerisate aus 91 Gew.-% Methylmethacrylat und 9 Gew.-% Methylacrylat mit einem Molekulargewicht (Gewichtsmittelwert $M_w$) von 60.000 bis 200.000 g/mol erwiesen.

Die Herstellung der Komponente A) führt man im allgemeinen nach bekannten Polymerisationsverfahren wie Masse-, Lösungs-, Emulsions- oder Perlpolymerisation durch. Solche Verfahren sind beispielsweise im Kunststoffhandbuch, Bd. 9, Vieweg und Esser; Polymethylmethacrylat, Carl-Hanser-Verlag, München 1975, S. 36 ff beschrieben.

Der harte Kern (b_1) des Emulsionspfropfcopolymerisates besteht erfindungsgemäß im wesentlichen aus

80 bis 99,99 Gew.-%, vorzugsweise 90 bis 98,99 Gew.-% Methylmethacrylat (I),

0,01 bis 5 Gew.-% Allylmethacrylat (II),

0 bis 19,99 Gew.-% vorzugsweise 1 bis 9,99 Gew.-% weiteren monofunktionellen Comonomeren (III) und

0 bis 3 Gew.-% weiteren di- oder polyfunktionellen comonomeren (IV).

Als monofunktionelle Comonomere (III) seien

Acrylsäure-$C_1$-$C_{20}$-alkylester und -$C_5$-$C_{12}$-cycloalkylester, Methacrylsäure-$C_2$-$C_{20}$-alkylester und -$C_5$-$C_{12}$-cycloalkylester, Acryl- und Methacrylnitril, Acryl- und Methacrylamid sowie deren N-Alkyl- und Dialkylderivate mit $C_1$-$C_{20}$-Alkylgruppen, Vinylester von aliphatischen $C_2$-$C_8$-Carbonsäuren wie Vinylacetat, Vinylaromaten wie Styrol, $\alpha$-Methylstyrol und Vinyltoluol, Vinylhalogenide wie Vinylchlorid und Vinylidenchlorid sowie Mischungen dieser Monomeren genannt.

Als Comonomere (III) sind Acrylsäure-$C_1$-$C_8$-alkylester bevorzugt, insbesondere Acrylsäureethylester, die vorzugsweise in einer Menge von 1 bis 6 Gew.-% im Polymerisat des Kerns enthalten sind.

Die Comonomeren (III) dienen hauptsächlich zur Verbesserung der thermischen Stabilität der Pfropfcopolymerisate.

Als di- oder polyfunktionelle Comonomere (IV) seien

Alkylenglycoldimethacrylste wie Ethylenglycoldimethacrylat, Propylenglycoldimethacrylat, 1,3-Butylenglycoldimethacrylat und 1,4-Butylenglycoldimethacrylat,

Alkylenglycoldiacrylate wie Ethylenglycoldiacrylat, Propylenglycoldiacrylat, 1,3-Butylenglycoldiacrylat und 1,4-Butylenglycoldiacrylat,

Acrylate und Methacrylate von Glycerin, Trimethylolpropan, Pentaerythrit, Inosit und ähnliche Zuckeralkohole,

Acryl- und Methacrylamide von Ethylendiamin und andere aliphatische Di- und Polyamine,

Triacryl- und Trimethacrylamide,

Triallylcyanurat und Triallylisocyanurat sowie

Vinylbenzole wie Divinylbenzol und Trivinylbenzol genannt.

Die Comonomeren (IV) dienen als Vernetzungsmittel. Sie werden aufgrund ihrer Eigenschaft, sich gleichmäßig in die polymere Phase einzubauen, auch als "Polymerisationsvernetzer" bezeichnet. Während der Polymerisationsreaktion ist die Geschwindigkeit ihres Verbrauchs im wesentlichen vergleichbar mit derjenigen des Hauptmonomeren, wodurch eine Vernetzung innerhalb der Phase zustande kommt.

Die Comonomeren (IV) können bis zu 3 Gew.-% im Kernpolymerisat enthalten sein, vorzugsweise verwendet man sie jedoch nicht mit oder nur in Mengen von 0,1 bis 0,5 Gew.-%.

Im Gegensatz hierzu ist die Verwendung eines zweiten Vernetzertyps, der auch als "Pfropfvernetzer" bezeichnet wird, wesentlich.

Als pfropfaktives Comonomeres ist Allylmethacrylat (II) erfindungsgemäß mit 0,01 bis 5 Gew.-% am Aufbau des Kernes beteiligt, wobei sich die Menge nach der gewünschten Kerngröße richtet. Bei einer bevorzugten Kerngröße von 40 bis 140 nm beträgt der Anteil an Allylmethacrylat 0,1 bis 0,5 Gew.-%.

4

Pfropfaktive Comonomere sorgen üblicherweise für eine äußere Vernetzung und bewirken beim Aufbau eines Emulsionspfropfcopolymerisates beispielsweise die Verknüpfung der Kernphase mit der nachfolgenden Polymerisationsstufe. Pfropfvernetzer wie Allylmethacrylat zeigen im allgemeinen dieses Verhalten, weil eine polymerisierbare Doppelbindung (Doppelbindung des Säureteils) mit vergleichbarer Geschwindigkeit wie das Hauptmonomere (Methylmethacrylat) polymerisiert. Dagegen reagiert die Doppelbindung der Allylgruppe mit einer deutlich niedrigeren Polymerisationsgeschwindigkeit, so daß am Ende der Polymerisation einige dieser Doppelbindungen unverändert in der Kernphase erhalten bleiben, wodurch eine Pfropfvernetzung zwischen zwei Phasen möglich ist.

Das Kernmaterial hat in der Regel eine Glasübergangstemperatur von mehr als 50°C, die vorzugsweise im Bereich von 80 bis 130°C liegt.

In der zweiten Polymerisationsstufe wird in Gegenwart des Emulsionspolymerisats des Kerns, auch "Kernlatex" oder "Saatlatex" genannt, ein Monomerengemisch aus im wesentlichen
60 bis 89,99 Gew.-%, vorzugsweise 70 bis 89,99 Gew.-% eines $C_1$-$C_{20}$-Alkylesters der Acrylsäure (V),
10 bis 39,99 Gew.-%, vorzugsweise 10 bis 29,99 Gew.-% eines vinylaromatischen Monomeren (VI),
0,01 bis 5 Gew.-%, vorzugsweise 0,1 bis 5 Gew.-% Allylmethacrylat (II),
0 bis 10 Gew.-%, Methylmethacrylat (I) und/oder eines monofunktionellen Comonomeren (III) und
0 bis 3 Gew.-%, eines di- oder polyfunktionellen Comonomeren (IV),
polymerisiert, welches die erste elastomere Schale ($b_2$) des fünfstufigen Emulsionspfropfcopolymerisates bildet.

Unter den $C_1$-$C_{20}$-Alkylestern der Acrylsäure (V) sind die $C_2$-$C_{10}$-Alkylester bevorzugt, wobei n-Butylacrylat und 2-Ethylhexylacrylat besonders bevorzugt sind.

Als vinylaromatische Monomere (VI) eignen sich
Styrol
$\alpha$-Methylstyrol,
t-Butylstyrol,
Monochlorstyrol,
Vinyltoluol und
Acryl- und Methacrylsäurephenylester.

Die vinylaromatischen Monomeren (VI), insbesondere Styrol, sind von besonderer Bedeutung, da sie den Brechungsindex erhöhen. Auf diese Weise läßt er sich an denjenigen der Kernphase sowie der nachfolgenden Polymerisatphasen angleichen. Darüber hinaus kann der Brechungsindex durch die vinylaromatischen Monomeren des fünfstufigen Emulsionspolymerisates auch mit demjenigen der thermoplastischen Formmasse abgestimmt werden.

Ferner sind im polymeren Material der ersten Schale 0,01 bis 5 Gew.-%, bevorzugt 0,1 bis 5 Gew.-% des Pfropfvernetzers Allylmethacrylat (II) enthalten. Schon sein alleiniger Zusatz führt nach den bisherigen Beobachtungen zu einer hohen Schlagzähigkeit des fünfstufigen Endproduktes, so daß die Mitverwendung weiterer als Polymerisationsvernetzer wirkender di- oder polyfunktioneller Comonomeren (IV) nicht unbedingt notwendig ist. Ihr Anteil kann 0 bis 3 Gew.-% des Gesamtgewichtes der Monomeren der ersten Schale betragen.

Der Anteil an monofunktionellen Comonomeren (I) und (III) kann 0 bis 10 Gew.-% sein, wobei er so zu begrenzen ist, daß die Glasübergangstemperatur von 0°C in der elastomeren ersten Schale nicht überschritten wird. Als weitere monofunktionelle Comonomere III kommen
Vinylcarbazol
Malein-, Fumar- und Itakonsäure-$C_1$- bis $C_{10}$-alkylester, Malein-, Fumar- und Itakonsäureamid sowie deren N-Alkyl- und N,N-Dialkylderivate mit $C_1$- bis $C_{10}$-Alkylgruppen in Betracht.

Stark polare monofunktionelle Comonomere (III) wie
Acryl- und Methacrylsäure,
Acryl- und Methacrylamide,
Hydroxyalkylester und
Aminoalkylester der Acryl- und Methacrylsäure mit bis zu 8 C-Atomen werden - falls überhaupt - vorzugsweise nur in geringen Mengen in die erste Schale ($b_2$) polymerisiert.

In der dritten Polymerisationsstufe wird in Gegenwart der bereits gebildeten Kern- und Erstschalenlatices ein Monomerengemisch zu einer harten zweiten Schale ($b_3$), deren Anteil 5 bis 20 Gew.-%, vorzugsweise 5 bis 15 Gew.-% des Gesamtgewichtes des fünfstufigen Emulsionspfropfcopolymerisates beträgt, polymerisiert. Das Monomerengemisch hat eine Zusammensetzung, wie sie für das Kernmaterial ($b_1$) angegeben ist, die jedoch nicht mit dieser identisch zu sein braucht. Die Glasübergangstemperatur der zweiten Schale ($b_3$) liegt im allgemeinen über 50°C, vorzugsweise zwischen 80 und 130°C.

In der vierten Polymerisationsstufe wird in Gegenwart der drei zuvor polymerisierten Phasen ein Monomerengemisch zu einer elastomeren dritten Schale ($b_4$) polymerisiert. Entsprechend der elastomeren ersten Schale ($b_2$)hat sie einen Anteil von 15 bis 50 Gew.-%, vorzugsweise 20 bis 45 Gew.-% am Gesamtgewicht des Pfropfpolymerisates, mit der Maßgabe, daß die Summe der elastomeren Schalen ($b_2$) und ($b_4$) 50 bis 75 %, vorzugsweise 60 bis 75 Gew.-% beträgt. Die Gesamtmenge beider Schalen kann sich zu gleichen Anteilen auf die einzelnen elastomeren Polymerisatphasen verteilen.

Das eingesetzte Monomerengemisch entspricht einer Zusammensetzung gemäß der Schale ($b_2$), braucht aber mit ihr nicht identisch zu sein.

Die elastomere dritte Schale ($b_4$) hat üblicherweise eine Glasübergangstemperatur unter 0°C, vorzugsweise im Bereich zwischen -5 und -35°C.

In der fünften Polymerisationsstufe wird in Gegenwart der bereits gebildeten Kern- und Schalenlatices ein Monomerengemisch zu einer äußeren harten vierten Schale ($b_5$) polymerisiert. Der Anteil dieser Schale - auch äußere Hartphase genannt - an der Gesamtmenge des Emulsionspfropfcopolymerisates liegt zwischen 15 und 30 Gew.-%, vorzugsweise zwischen 15 und 25 Gew.-% und besteht aus im wesentlichen 80 bis 99,95 Gew.-%, vorzugsweise 90 bis 98,95 Gew.-% Methylmethacrylat (I),

0,05 bis 2 Gew.-% eines Reglers (VII) und

0 bis 19,95 Gew.-%, vorzugsweise 1 bis 9,95 Gew.-% weiteren monofunktionellen Comonomeren (III), wobei als monofunktionelle Comonomere (III) $C_1$-$C_{20}$-Alkylester der Acrylsäure wie Acrylsäureethylester in einer Menge von 1 bis 6 Gew.-%, besonders bevorzugt sind. Wie in den zuvor gebildeten Hartphasen - Kern ($b_1$) und zweite Schale ($b_3$) - bewirkt ihr Zusatz üblicherweise eine Verbesserung der Thermostabilität.

Als Regler (VII) sind einwertige $C_4$-$C_{12}$-Alkylmerkaptane wie sek-Butylmerkaptan, n-Dodecylmerkaptan und t-Dodecylmerkaptan geeignet. Besonders geeignet ist n-Dodecylmerkaptan.

Die Mitverwendung eines Reglers ist von besonderer Bedeutung, da er im allgemeinen die Kettenlänge bei der Polymerisation der Endphase begrenzt. Auf diese Weise kann das Molekulargewicht der äußeren Hartphase demjenigen der thermoplastischen Masse angepaßt werden, was besonders bei der Abmischung der Emulsionspfropfcopolymerisate mit thermoplastischen Massen von Vorteil ist.

Die Glasübergangstemperatur der äußeren Schale ($b_5$) ist in der Regel größer als 50°C, bevorzugt sind 80 bis 130°C.

Die erfindungsgemäßen Emulsionspfropfcopolymerisate lassen sich in an sich bekannter Weise nach der Methodik der Emulsionspfropfpolymerisation die auch als Saatlatex-Verfahren bezeichnet wird, in fünf aufeinanderfolgenden Stufen herstellen, wobei die Latexteilchen in der Regel bis zum Abschluß der Endstufe im emulgierten Zustand verbleiben.

Durch das polymere Produkt im Saatlatex wird üblicherweise der Gesamtgehalt an Teilchen im fünfstufigen Endprodukt festgelegt. Das bedeutet, daß nach der ersten Polymerisationsstufe weitere Teilchen im wesentlichen nicht neu gebildet werden und der Teilchengehalt annähernd konstant bleibt.

Durch Verwendung von Emulgatoren läßt sich im allgemeinen die Teilchengröße sowohl des Kernlatex als auch der Latexteilchen in den Zwischenstufen festlegen, wobei Emulgatorart und -konzentration bestimmend sind.

Es können anionogene und nicht ionogene Emulgatoren verwendet werden.

Geeignete Emulgatoren sind beispielsweise

Dioctylnatriumsulfosuccinat,

Natriumlaurylsulfat,

Natriumdodecylbenzolsulfonat,

Alkylphenoxypolyethylensulfonate und

Salze von langkettigen Carbon- und Sulfonsäuren.

Als nichtionogene Emulgatoren sind beispielsweise

Fettalkoholpolyglykolether,

Alkylarylpolyglykolether,

Fettsäuremonoethanolamide sowie

ethoxylierte Fettsäureamide und -amine

geeignet.

Bezogen auf das Gesamtgewicht des Emulsionspfropfcopolymerisates liegt die Gesamtemulgatormenge vorzugsweise bei 0,05 bis 5 Gew.-%.

Der Durchmesser ($d_{50}$-Wert) der fertigen Emulsionspolymerisatteilchen wird in an sich bekannter Weise erfindungsgemäß im Bereich von 100 bis 200 nm, bevorzugt von 100 bis 150 nm eingestellt. Bei Teilchengrößen von mehr als 200 nm werden nach den bisherigen Beobachtungen keine weißbrucharmen Folien (70 $\mu$m dick) erhalten.

Als Polymerisationsinitiatoren können
Ammonium- und Alkaliperoxodisulfate wie Kaliumperoxodisulfat sowie
Initiatorkombinationssysteme wie Natriumpersulfat-Natriumhydrosulfit (Natriumdithionit), Kaliumpersulfat-Natriumformaldehydsulfoxylat und Kaliumperoxodisulfat-Natriumdithionit-Eisen-II-sulfat
verwendet werden, wobei die Polymerisationstemperatur im Fall der thermisch zu aktivierenden Ammonium- und Alkalimetallperoxodisulfate in der Regel bei 50 bis 100 °C und bei den Initiatorkombinationen, die als Redoxsysteme wirksam sind, darunter liegen kann, etwa im Bereich von 20 bis 50 °C.

Die gesamte Initiatormenge liegt vorzugsweise zwischen 0,02 und 0,5 Gew.-%, bezogen auf das fertige Emulsionspolymerisat.

Neben dem Molmassenregler, der bei der Polymerisation der äußeren harten Schale ($b_5$) verwendet wird, kann die Polymerisation des Kerns und der übrigen Schalen ebenfalls in Gegenwart eines Reglers durchgeführt werden. Die Gesamtreglermenge liegt üblicherweise zwischen 0,01 und 1 Gew.-%, bezogen auf das Gesamtgewicht des Polymerisates.

Im allgemeinen empfiehlt es sich, den pH-Wert konstant zu halten, weswegen die Mitverwendung eines Puffers zweckmäßig ist. Üblich sind Salze der Phosphorsäure, z.B. Mischungen von Kaliumdihydrogenphosphat und Dinatriumhydrogenphosphat; es können auch ammoniakalische Lösungen verwendet werden.

Die Polymerisation kann bei einer Temperatur im Bereich zwischen 70 und 100 °C durchgeführt werden, wobei eine Temperatur von 85 bis 95 °C bevorzugt ist. Bei Temperaturen unter 70 °C verlängern sich die Polymerisationszeiten, bei Tempeaturen über 100⁰C ist es im allgemeinen erforderlich, die Polymerisation unter Druck durchzuführen.

Im übrigen wird das Emulsionspfropfcopolymerisat (B) in der Regel so hergestellt, daß man eine wäßrige Mischung, bestehend aus Monomeren, Vernetzer, Emulgator, Initiator, Regler und einem Puffersystem in einem mit Stickstoff inertisierten Reaktor vorlegt, in der Kälte unter Rühren inertisiert und dann für etwa 15 bis 120 Minuten auf die Polymerisationstemperatur bringt. Auf diese Weise wird in der Regel zunächst durch Emulgieren und Polymerisation des Kernmonomerengemisches der Kernlatex gebildet. Die weiteren Stufen werden üblicherweise jeweils unter Zulauf der Monomeren in Gegenwart der bereits gebildeten Stufe durch Emulsionspolymerisation erzeugt, wobei es zweckmäßig ist, die Monomeren zuvor unter Rühren im wäßrigen Medium zu emulgieren.

Grundsätzlich erfolgt der Zulauf einer weiteren Stufe erst dann, wenn die Polymerisation der vorhergehenden Stufe abgeschlossen ist, wodurch eine Durchmischung der einzelnen Stufen unterdrückt und ein reiner fünfstufiger Aufbau des Emulsionspfropfcopolymerisates gewährleistet wird. Dadurch kann eine Nachreaktionszeit von 15 bis 120 Minuten nach Zulaufen der jeweiligen Stufe und vor Beginn des Zulaufs der nächsten Stufe erforderlich sein.

Die Isolierung des Emulsionspolymerisates aus dem erhaltenen Latex erfolgt auf bekannte Weise durch Ausfällung, Filtration und anschließender Trocknung. Für die Ausfällung können beispielsweise wäßrige Lösungen von anorganischen Salzen wie Natriumchlorid, Natriumsulfat, Magnesiumsulfat und Calciumchlorid, wäßrige Lösungen von Salzen der Ameisensäure wie Magnesiumformiat, Calciumformiat und Zinkformiat, wäßrige Lösungen von anorganischen Säuren wie Schwefel- und Phosphorsäure sowie wäßrige ammoniakalische und aminische Lösungen sowie andere wäßrige alkalische Lösungen, z.B. von Natrium- und Kaliumhydroxid verwendet werden.

Die Trocknung kann beispielsweise durch Gefrier-, Sprüh-, Wirbelschicht- und Umlufttrocknung erfolgen.

Das getrocknete Polymerisat kann dann beispielsweise in Extrudern mit der Komponente (A) zu thermoplastischen Formmassen verarbeitet werden.

Ferner können Koagulation und Entwässerung des Latex direkt im Extruder erfolgen. Zur Herstellung der thermoplastischen Formmassen kann man den Latex auch unmittelbar im Extruder mit der Komponente (A) vermischen.

Nicht nur durch Extrusion, sondern auch durch andere Verarbeitungsverfahren wie Kalandrieren und Spritzgießen können die Emulsionspolymerisate (B) unter Abmischung mit Komponente (A) zu schlagzähen Formkörpern, Folien und Platten, insbesondere zu Folien, die als Überzugs- und Witterungsschutzschichten verwendet werden, verarbeitet werden. Darüber hinaus können auch andere Zusatzstoffe wie Antioxidantien, Lichtstabilisatoren, thermische Stabilisatoren, Schmiermittel, Farbstoffe und Füllstoffe mitverarbeitet werden.

Da die beschriebenen Folien bevorzugt als Witterungsschutzschichten auf andere Materialien (z.B. PVC, Holz etc.) aufkaschiert werden, empfiehlt es sich, die gängigen UV-Schutzadditive mit einzuarbeiten. Als besonders wirksam hat sich in diesem Zusammenhang Bis[2-hydroxy-5-t-octyl-3-(benzotriazol-2-yl)phenyl]-methan erwiesen, das zu 0,1 bis 3 Gew.-%, bevorzugt 0,5 bis 1,5 Gew.-% eingesetzt wird.

Die erfindungsgemäßen thermoplastischen Formmassen haben gegenüber solchen aus dem Stand der Technik bekannten den Vorteil, daß sie zu weißbrucharmen Folien verarbeitet werden können.

Beispiel

(A) Herstellung der Emulsionspfropfcopolyerisate (B)

Folgende Abkürzungen werden in den Beispielen verwendet:
MMA       - Methylmethacrylat
α-Mes      -α-Methylstyrol
EA          - Ethylacrylat
n-BuA      - Butylacrylat
ALMA      - Allylmethylacrylat

Bei der Angabe der mittleren Teilchengrößen handelt es sich in allen Fällen um das Gewichtsmittel der Teilchengrößen, die mittels einer analytischen Ultrazentrifuge entsprechend der Methode von W. Scholtan und H. Lange, Kolloid-Z. und Z.Polymere 250 (1972), Seiten 782 bis 796, bestimmt wurden. Die Ultrazentrifugenmessung liefert die integrale Massenverteilung des Teilchendurchmessers eine Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gew.-% der Teilchen einen kleineren Durchmesser haben als der Durchmesser, der dem $d_{50}$-Wert entspricht. Ebenso haben dann 50 Gew.-% der Teilchen einen größeren Durchmesser als der $d_{50}$-Wert.

Die Lösungsviskosität wird angegeben durch die Viskositätszahl VZ, die die relative Erhöhung der Viskosität eines Lösungsmittels durch 0,1 bis 1,0 g/100 ml gelöstes Polymer, geteilt durch die Konzentration in g/100 ml angibt. Die Viskositätszahlen steigen mit dem Polymerisationsgrad an.

$$ VZ = \left( \frac{\eta}{\eta_o} - 1 \right) \cdot \frac{1}{C} $$

$$ \frac{\eta}{\eta_o} = \text{Viskositätsverhältnis mit} $$

$\eta$ =       Viskosität der Polymerlösung definierter Konzentration
$\eta_o$ =       Viskosität des Lösungsmittels
C =       Konzentration der Lösung in g/ml.

Beispiel 1

In einem Druckreaktor von 800 l Inhalt wurde jeweils eine Mischung aus den in der Tabelle 1 angegebenen Komponenten in den ebenfalls dort ersichtlichen Mengen vorgelegt, in der Kälte unter Rühren mit Stickstoff inertisiert und dann 30 Minuten auf 95°C erhitzt. Nach Ablauf der Polymerisation erfolgte bei 95°C der Zulauf einer emulgieren und mit Stickstoff inertisierten zweiten Mischung (siehe Tabelle 1) in den Reaktor. In der gleichen Weise wurden nach der Polymerisation die weiteren Zuläufe in den Reaktor dosiert. Die einzelnen Zulauf- und Polymerisationszeiten bei 95°C sind Tabelle 1 zu entnehmen.

Die Emulsionspfropfcopolymerisate wurden aus den Latices ausgefällt, isoliert, gewaschen und getrocknet.

Beispiel 1

Tabelle 1: 5-stufiges Emulsionspfropfcopolymerisat

Stoffkomponenten (kg)

| Stoffkomponenten (kg) | Vorlage (1. Stufe) | Zulauf 1 (2. Stufe) | Zulauf 2 (3. Stufe) | Zulauf 3 (4. Stufe) | Zulauf 4 (5. Stufe) |
|---|---|---|---|---|---|
| vollentsalztes Wasser | 120,000 | 45,000 | 18,000 | 80,000 | 37,000 |
| Dioctylnatriumsulfosuccinat | 0,650 | 0,085 | 0,110 | 0,170 | 0,210 |
| Kaliumperoxodisulfat | 0,075 | 0,055 | 0,015 | 0,100 | 0,030 |
| 25%ige wäßrige Ammoniaklösung | 0,060 | 0,045 | 0,020 | 0,080 | 0,030 |
| | | | | | |
| MMA | 8,000 | - | 19,500 | - | 39,000 |
| EA | 0,330 | - | 0,930 | - | 1,860 |
| n-BuA | - | 35,370 | - | 70,740 | - |
| Styrol | - | 7,765 | - | 15,525 | - |
| ALMA | 0,026 | 0,885 | 0,025 | 1,770 | - |
| n-Dodecylmerkaptan | - | - | - | - | 0,241 |
| Zulaufzeit bei 95°C (min) | - | 90 | 30 | 105 | 45 |
| Polymerisationszeit bei 95°C (min) | 30 | 45 | 30 | 60 | 15 |

Vergleichsbeispiel 1

In einem 10 l-Kolben mit Rührer und Rückflußkühler wurde unter einer Atmosphäre von Stickstoff ein Gemisch aus 2000 g Wasser, 1,5 g Kaliumperoxodisulfat und 990 g der nachfolgend beschriebenen Emulsion vorgelegt.

| Emulsion: | 1199,29 g | Butylacrylat |
|---|---|---|
| | 281,96 g | Styrol |
| | 6,73 g | Allylmethacrylat |
| | 7,03 g | Butandioldimethacrylat |

Die Vorlage wurde unter Rühren auf 90°C erhitzt. Nach dem Beginn der Polymerisation wurde der Rest der Emulsion innerhalb von 2 h nachdosiert und anschließend 1 h nachpolymerisiert. Für die Pfropfung wurde eine Emulsion aus

772,8 g Methylmethacrylat

32,2 g Methylacrylat

3,86 g n-Dodecylmercaptan

innerhalb 1 h zudosiert. Die Nachpolymerisationszeit betrug 1 h. Die Teilchengröße ist Tabelle 2 zu entnehmen.

Vergleichsbeispiel 2 (analog zu Beispiel 6 aus der DE-A 33 00 526)

447,8 g Methylmethacrylat, 2,2 g Allylmethacrylat wurden nach dem Emulsionsverfahren mit einer Wasserphase von 1150 g Wasser polymerisiert. Als Initiator wurden 3 g Kaliumperoxodisulfat und als Emulgator 0,9 g Natriumlaurylsulfat verwendet und die Polymerisation durch Emulgieren und Erwärmen des gesamten Ansatzes durchgeführt. Der entstandene Saatlatex hatte einen Feststoffgehalt von 28 Gew.-%.

250 g des so erhaltenen Saatlatexes wurden in einer Rührapparatur vorgelegt und als elastomere Zwischenstufe eine Mischung aus 91,4 g n-Butylacrylat, 16,4 g Styrol, 6,5 g Methylmethacrylat und 3,0 g Trimethylolpropantriacrylat und 82 g Wasser, 0,09 g Natriumlaurylsulfat sowie 0,048 g Kaliumperoxodisulfat zugegeben und thermisch aufpolymerisiert.

Daran anschließend wurde als nicht-elastomere Endstufe eine Mischung aus 80 g Methylmethacrylat, 26,5 g Wasser, 0,06 g Natriumlaurylsulfat, 0,045 g Kaliumperoxodisulfat und 0,15 g 2-Ethylhexylthioglykolat thermisch aufgepfropft.

Der Latex hatte einen Feststoffgehalt von 44 Gew.-%. Das Emulsionspolymerisat wurde anschließend durch Sprühtrocknen erhalten. Die Teilchengröße ist Tabelle 2 zu entnehmen.

Vergleichsbeispiel 3 (analog zu Beispiel 7 aus der DE-A 330 026)

Vergleichsbeispiel 1 wurde wiederholt, mit dem Unterschied, daß in der Zwischenstufe nur 1,5 g Trimethylolpropantriacrylat eingesetzt wurden. Die Teilchengröße ist Tabelle 2 zu entnehmen.

Vergleichsbeispiel 4

Die Herstellung des 3-stufigen Pfropfcopolymerisates ("Modifiers") erfolgte durch Saatpolymerisation. Dazu wurde zunächst die Kernsaat separat hergestellt.

Zusammensetzung des Kernes:     99,5 Teile MMA/0,5 Teile ALMA

Ansatz:

| Vorlage | 1400 g | $H_2O$ |
| | 20 Gew.-% | der nachstehenden Emulsion |
| | 5,6 g | $Na_2S_2O_8$ (0,2 % bez. auf Monomere) |
| Emulsion | 2786 g | MMA |
| | 14 g | ALMA |
| | 2789 g | $H_2O$ |
| | 28 g | Emulgator Triton® GR 5M (60 gew.-%ig)* (0,6 Gew.-% bez. auf Monomere) |

\*) Emulgator von Rohm & Haas, Dioctyl-Na-sulfosuccinat, Mengenangaben des Emulgators beziehen sich im folgenden Text immer auf eine 60 gew.-%ige Lösung.

Fahrweise:

Die Vorlage wurde unter Stickstoff-Spülung in einem 10-l-Dreihalskolben auf 70°C erwärmt und 30 min bei dieser Temperatur gehalten. Innerhalb 3 h 10 min wurde dann die Emulsion zugesetzt (=1500 ml/h). Nach Beendigung des Zulaufs wurde noch 1 h nachpolymerisiert.

Der Feststoffgehalt betrug 40 Gew.-%, der mittlere Teilchendurchmesser lag zwischen 160 und 180 nm. Die Synthese der Pfropfhüllen erfolgte gemäß der folgenden Vorschrift:

| 1. Stufe (Kern) | 20 Gew.-Teile [99,5 MMA/0,5 ALMA] |
| 2. Stufe (elastomere Phase) | 50 Gew.-Teile [80,7 BA/18,8 S/0,5 ALMA] |
| 3. Stufe (Hülle) | 30 Gew-Teile [96,0 MMA/4,0 EA] |

| 1. Stufe | Vorlage | 1420 g | Kernsaat (= 568 g Feststoff) |
| | | 448 g | $H_2O$ |
| 2. Stufe | Zulauf | 1145,9 g | BA |
| | | 267,0 g | S |
| | | 7,1 g | ALMA |
| | | 14,2 g | Emulgator (= 0,6 Gew.-%) |
| | | 1420 g | $H_2O$ |
| | | 1,42 g | $Na_2S_2O_8$ (= 0,1 Gew.-%) |
| 3. Stufe | Vorlage | 1523 g | $H_2O$ |
| | | 4,26 g | Emulgator (= 0,3 Gew.-%) |
| | | 0,85 g | $Na_2S_2O_8$ (= 0,1 Gew.-%) |
| | Zulauf | 817,9 g | MMA |
| | | 34,1 g | EA |

Fahrweise

Die Vorlage (1. Stufe) wurde unter Stickstoff-Spülung auf 80°C aufgeheizt. Nach Erreichen der Temperatur ließ man die Zusammensetzung der 2. Stufe als Emulsion innerhalb von 2 h 50 min zulaufen (= 1000 ml/h) und polymerisierte anschließend 1 h 30 min nach. Dann wurde die Vorlage der 3. Stufe zum Reaktionsgemisch gegeben, wobei die Monomeren innerhalb 50 min zugesetzt wurden (= 100 ml/h). Abschließend wurde noch 1 h nachpolymerisiert.

Aufarbeitung:

In 16 kg einer 0,3 gew.-%igen wäßrigen Ca-Formiatlösung wurden bei ca. 80°C innerhalb von 5 min 8 kg Dispersion (Feststoffgehalt: ca. 40 Gew.-%) eingerührt. Das Gemisch wurde für 30 min unter Rühren bei dieser Temperatur gehalten. Anschließend wurde das Koagulat abzentrifugiert, mit vollentsalztem Wasser gewaschen und bei 80°C unter Stickstoff im Vakuum-Trockenschrank getrocknet.

Zur Herstellung der thermoplastischen Formmassen wurde als Komponente (A) Lucryl® G 66 (ein Copolymer aus 91 Gew.-% MMA und 9 Gew.-% MA; Viskositätszahl 58 ml/g; BASF) verwendet.

Die thermoplastischen Formmassen wurden durch Compoundierung auf einem Extruder (ZSK-25, Werner & Pfleiderer; Durchsatz 10 kg/h, 200 U/min und 230°C) hergestellt.

Die Prüfung der Weißbruchanfälligkeit der thermoplastischen Formmassen erfolgte visuell an kalandrierten Folien (Stärke 70 μm) durch zehnfaches Knicken der Folie um jeweils 180° an einer Stelle.

Tabelle:

| Nr. | Emulsions-pfropf-copolymerisat | mittlere Teilchengröße [nm] | Menge des Emulsions-pfropcopoly-merisates [Gew.] | Weißbruch |
|---|---|---|---|---|
| erfindungs-gemäß | | | | |
| 1 | Beispiel 1 | 120 | 70 | 0 |
| 2 | " | 120 | 65 | 0 |
| 3 | " | 120 | 60 | 2 |
| zum Vergl. | | | | |
| 4 | " | 120 | 55 | 4 |
| 5 | Vergleichs-beispiel 1 | 80 | 65 | 5 |
| 6 | Vergl.-Bsp. 2 | 130 | 65 | 3 |
| 7 | Vergl.-Bsp. 3 | 130 | 65 | 3 |
| 8 | Vergl.-Bsp. 4 | 330 | 65 | 5 |

Skala:    von 0 bis 5          ) wobei
          0 = kein Weißbruch    ) entspricht
          5 = starker Weißbruch )

**Patentansprüche**

1.   Thermoplastische Formmassen, enthaltend im wesentlichen
        (A) 20 bis 40 Gew.-% eines Copolymerisats, erhältlich im wesentlichen aus
        80 bis 100 Gew.-% mindestens eines $C_1$-$C_{18}$-Alkylesters der Methacrylsäure und
        0 bis 20 Gew.-% mindestens eines $C_1$-$C_{18}$-Alkylesters der Acrylsäure
        und
        (B) 60 bis 80 Gew.-% eines Emulsionspfropfcopolymerisates, aufgebaut im wesentlichen aus
        ($b_1$) 2 bis 10 Gew.-% eines Kerns, erhältlich durch Polymerisation eines Monomerengemisches
        bestehend im wesentlichen aus
        80 bis 99,99 Gew.-% Methylmethacrylat (I),
        0,01 bis 5 Gew.-% Allylmethacrylat (II)

0 bis 19,99 Gew.-% eines monofunktionellen Comonomeren (III) und

0 bis 3 Gew.-% eines di- oder polyfunkionellen Comonomeren (IV),

(b$_2$) 15 bis 50 Gew.-% einer ersten Schale, erhältlich durch Polymerisation eines Monomerengemisches in Gegenwart des Kerns (b$_1$), bestehend im wesentlichen aus

60 bis 89,99 Gew.-% eines C$_1$-C$_{20}$-Alkylesters der Acrylsäure (V),

10 bis 39,99 Gew.-% eines vinylaromatischen Monomeren (VI),

0,01 bis 5 Gew.-% Allylmethacrylat (II),

0 bis 10 Gern.-% Methylmethacrylat (I) und/oder eines monofunktionellen Comonomeren (III) und

0 bis 3 Gew.-% eines di- oder polyfunktionellen Comonomeren (IV),

(b$_3$) 5 bis 20 Gew.-% einer zweiten Schale, erhältlich durch Polymerisation eines Monomerengemisches mit der unter (b$_1$) genannten Zusammensetzung in Gegenwart des nach Stufe (b2) erhaltenen Polymerisates,

(b$_4$) 15 bis 50 Gew.-% einer dritten Schale, erhältlich durch Polymerisation eines Monomerengemisches mit der unter (b$_2$) genannten Zusammensetzung in Gegenwart des nach Stufe (b$_3$) erhaltenen Polymerisates,

(b$_5$) 15 bis 30 Gew.-% einer vierten Schale, erhältlich durch Polymerisation eines Monomerengemisches, bestehend im wesentlichen aus

80 bis 99,95 Gew.-% Methylmethacrylat (I),

0 bis 19,95 Gew.-% eines monofunktionellen Comonomeren (III) und

0,05 bis 2 Gew.-% eines Reglers (VII),

mit den Maßgaben, daß

. die Summe der Anteile der Schalen (b$_2$) und (b$_4$) im Bereich von 50 bis 75 Gew.-% liegt und

. die Teilchengröße (d$_{50}$-Wert) des Emulsionspfropfcopolymerisates einen mittleren Durchmesser im Bereich von 100 bis 200 nm aufweist.

2. Thermoplastische Formmassen nach Anspruch 1, dadurch gekennzeichnet, daß man 65,01 bis 80 Gew.-% des Emulsionspfropfcopolymerisates einsetzt.

3. Verfahren zur Herstellung von thermoplastischen Formmassen gemäß den Ansprüchen 1 oder 2 in an sich bekannter Weise durch Mischen eines Copolymerisates, erhältlich aus im wesentlichen

80 bis 100 Gew.-% mindestens eines C$_1$-C$_{18}$-Alkylesters der Methacrylsäure und

0 bis 20 Gew.-% mindestens eines C$_1$-C$_{18}$-Alkylesters der Acrylsäure

mit

60 bis 80 Gew.-% eines Emulsionspfropfcopolymerisates, aufgebaut im wesentlichen aus

(b$_1$) 2 bis 10 Gew.-% eines Kerns, erhältlich durch Polymerisation eines Monomerengemisches bestehend im wesentlichen aus

80 bis 99,99 Gew.-% Methylmethacrylat (I),

0,01 bis 5 Gew.-% Allylmethacrylat (II)

0 bis 19,99 Gew.-% eines monofunktionellen Comonomeren (III) und

0 bis 3 Gew.-% eines di- oder polyfunktionellen Comonomeren (IV),

(b$_2$) 15 bis 50 Gew.-% einer ersten Schale, erhältlich durch Polymerisation in Gegenwart des Kerns (b$_1$) eines Monomerengemisches, bestehend im wesentlichen aus

60 bis 89,99 Gew.-% eines C$_1$-C$_{20}$-Alkylesters der Acrylsäure (V),

10 bis 39,99 Gew.-% eines vinylaromatischen Monomeren (VI),

0,01 bis 5 Gew.-% Allylmethacrylat (II),

0 bis 10 Gew.-% Methylmethacrylat (I) und/oder eines monofunktionellen Comonomeren (III) und

0 bis 3 Gew.-% eines di- oder polyfunktionellen Comonomeren (IV),

(b$_3$) 5 bis 20 Gew.-% einer zweiten Schale, erhältlich durch Polymerisation eines Monomerengemisches mit der unter (b$_1$) genannten Zusammensetzung in Gegenwart des nach Stufe (b2) erhaltenen Polymerisates,

b$_4$) 15 bis 50 Gew.-% einer dritten Schale, erhältlich durch Polymerisation eines Monomerengemisches mit der unter (b$_2$) genannten Zusammensetzung in Gegenwart des nach Stufe (b$_3$) erhaltenen Polymerisates,

b$_5$) 15 bis 30 Gew.-% einer vierten Schale, erhältlich durch Polymerisation eines Monomerengemisches, bestehend im wesentlichen aus

80 bis 99,95 Gew.-% Methylmethacrylat (I),

0,05 bis 2 Gew.-% eines Reglers (VII) und

0 bis 19,95 Gew.-% eines monofunktionellen Comonomeren (III),

13

wobei die Summe der Anteile der Schalen (b$_2$) und (b$_4$) im Bereich von 50 bis 75 Gew.-% liegt, dadurch gekennzeichnet, daß die Teilchengröße (d$_{50}$-Wert) des Emulsionspfropfcopolymerisates einen mittleren Durchmesser im Bereich von 100 bis 200 nm aufweist.

4. Verwendung der thermoplastischen Formmassen gemäß den Ansprüchen 1 oder 2, zur Herstellung von Formkörpern und Folien.

5. Formkörper und Folien, erhältlich durch die Verwendung gemäß Anspruch 4.

**Europäisches Patentamt**

**EUROPÄISCHER RECHERCHENBERICHT**

Nummer der Anmeldung

EP 94 11 1540

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| D,Y | EP-A-0 512 333 (BASF AG) <br> *Das ganze Dokument* <br> --- | 1-5 | C08L33/10 <br> C08L51/00 |
| Y | US-A-4 180 529 (GEORG H. HOFMANN) <br> * Ansprüche * <br> * Beispiele * <br> * Spalte 1, Zeile 27 - Zeile 39 * <br> * Spalte 4, Zeile 30 * <br> --- | 1-5 | |
| A | DE-A-22 53 689 (ROHM AND HAAS CO.) <br> * Ansprüche * <br> * Beispiele * <br> --- | 1-5 | |
| A <br> D | EP-A-0 113 924 (RÖHM GMBH) <br> * Ansprüche * <br> * Beispiele * <br> & DE-A-33 00 526 <br> ----- | 1-5 | |

| | | | RECHERCHIERTE SACHGEBIETE (Int.Cl.6) |
|---|---|---|---|
| | | | C08L <br> C08F |

Der vorliegende Recherchenbericht wurde für alle Patentansprüche erstellt

| Recherchenort | Abschlußdatum der Recherche | Prüfer |
|---|---|---|
| DEN HAAG | 21. Oktober 1994 | Persson, E |